# EUROPEAN PATENT APPLICATION

(11) **EP 3 900 820 A1**
(43) Date of publication of application: **27.10.2021**
(21) Application number: 20197199.1
(22) Date of filing: 21.09.2020
(51) Int. Cl.: B01J 8/04, C01B 3/34, B01J 8/02, B01J 8/06

(54) **DOUBLE TUBES COMBINED HEAT EXCHANGER AND STEAM REFORMER REACTOR COMPRISING TWO TYPES OF CATALYST BEDS**

(71) Applicant: Haldor Topsøe A/S, 2800 Kgs. Lyngby (DK)
(72) Inventor: ANDERSEN, Niels Ulrik, 2820 Gentofte (DK); DAHL, Per Juul, 2950 Vedbæk (DK)
(74) Representative: Haldor Topsøe A/S

(57) **Abstract**

A double tubes combined heat exchanger and steam reformer reactor comprises two catalyst beds with different types and sizes of catalyst particles to balance the heat transfer coefficients and pressure drops of the two catalyst beds to improve overall efficiency of the reactor.

## Description

### FIELD OF THE INVENTION

The present invention relates to a double tubes combined heat exchanger and steam reformer reactor for catalytic reforming of a hydrocarbon gas comprising two catalyst beds with different types of catalyst particles in order to obtain adjusted heat transfer coefficients for the two catalyst beds.

### BACKGROUND OF THE INVENTION

In double tubes combined heat exchanger and steam reformer reactors for catalytic reforming of hydrocarbon gas there are two catalyst beds. One catalyst bed is arranged within the tubes and one catalyst bed is arranged outside and around the tubes. The two catalyst beds have different heat transfer coefficients, among other due to the geometry and volume of the beds, which results in different efficiency of the catalyst beds. This again results in a decreased efficiency of the overall double tubes combined heat exchanger and steam reformer reactor.

Accordingly, there is a need for a double tubes combined heat exchanger and steam reformer reactor with an improved efficiency. Further, there is a need for a double tubes combined heat exchanger and steam reformer reactor where the heat coefficients of the two catalyst beds are adjusted to improve the efficiency of the double tubes combined heat exchanger and steam reformer reactor. This is solved by a double tubes combined heat exchanger and steam reformer reactor comprising at least two different types of catalyst particles arranged inside and outside the reactor tubes according to the present invention.

### SUMMARY OF THE INVENTION

A double tubes combined heat exchanger and steam reformer reactor for catalytic reforming of a hydrocarbon gas comprises an outer casing which has a longitudinal central axis. It further comprises at least one feed gas inlet, at least one effluent gas inlet and at least one product gas outlet. Within the reactor, a plurality of double tubes are arranged longitudinally. Each of the double tubes comprises an outer tube and an inner tube arranged concentrically within the outer tube. It is to be understood that the outer and inner tube rarely will be arranged exactly concentrically as this depends on tolerances and installation, in this context the word concentrically shall thus be understood with some tolerances. It can further be understood that the inner diameter of the outer tube is larger than the outer diameter of the inner tube, large enough to ensure installing of the inner tube within the outer tube despite well-known variation of tolerances; and also large enough to allow for a fluid flow in the annulus formed between the outer and the inner tube. The size of the annulus may vary from reactor to reactor depending on the process parameters and reactor size. A first catalyst bed is arranged within the plurality of inner tubes. The first catalyst bed comprises a first type of catalyst particles. A second catalyst bed is arranged outside and around the outer tubes, within the reactor, and thus fills at least a part of the void around the outer tubes within the reactor. The second catalyst bed comprises a second type of catalyst particles. According to an embodiment of the invention, the catalyst particle size of the first type of catalyst particles is larger than the catalyst particle size of the second type of catalyst particles. The second catalyst bed which is arranged outside and around the outer tubes (also known as CATOT, Catalyst Outside Tubes), is in known art reactors the catalyst bed with the lowest efficiency. According to the invention, the efficiency of the second catalyst bed is increased relative to the first catalyst bed, because the catalyst particle size of the second catalyst bed is reduced relative to the catalyst particle size of the first catalyst bed. Accordingly, the overall efficiency of the double tubes combined heat exchanger and steam reformer reactor is increased, so the size of the reactor can be reduced, or the yield of the reactor can be increased. The efficiency of the second catalyst bed is relatively increased because the average heat transfer coefficient of the second catalyst bed is increased as the catalyst particle size is decreased. Another effect of decreasing the catalyst particle size of the second catalyst bed is that the pressure-drop for the fluid passing through the second catalyst bed is increased. But in known art reactors, the pressure-drop in the second catalyst bed (outside and around the tubes) is already considerably lower the pressure drop in the first catalyst bed (inside the tubes). And as the two catalyst beds are run in parallel, there is room for increasing the pressure drop through the second catalyst bed without increasing the overall pressure drop of the double tubes combined heat exchanger and steam reformer reactor. It is to be understood that when reference is made to the particle size of the catalyst particles in the first as well as in the second catalyst bed, it is the average particle size of the whole catalyst bed respectively, as the catalyst particles within each bed have tolerances for variation.

In a further embodiment of the invention, the first type of catalyst particles each has a volume which is 5% - 500%, preferably 10% - 200% larger than the volume of each of the second type of catalyst particles. In this context, the volume of the catalyst particles is simply understood as the volume of the outer periphery of the catalyst particles without including the cavities in the catalyst particles which are often porous. This embodiment specifies the invention with larger catalyst particles in the first catalyst bed relative to the catalyst particles in the second bed with reference to the volume, since there are several ways to define that some particle types are larger than other particle types. It is important to understand that the important effect of the relative larger catalyst particles in the first catalyst bed compared to the catalyst particles in the second bed, is that the heat transfer coefficient of the second catalyst bed is raised relative to the heat transfer coefficient of the first catalyst bed, whereby both the efficiency and the pressure-drop of the two different catalyst beds are more balanced when compared to known art double tubes combined heat exchanger and steam reformer reactor.

In a further embodiment of the invention, the first type of catalyst particles each has a surface area which is 5% - 500%, preferably 10% - 200% larger than the surface area of each of the second type of catalyst particles. In this context, for simplicity of definition, the surface area of the catalyst particles is understood as the surface area without including any possible porosity of the catalyst particles.

In a further embodiment of the invention, the first type of catalyst particles each has a length which is 5% - 500%, preferably 10% - 200% larger than the length of each of the second type of catalyst particles, when measuring the largest outer dimension of the first and second type of catalyst particles respectively. It is to be understood that in this embodiment as well as in the foregoing embodiments of the invention, when referring to catalyst particle sizes, it is the average size of particles in each bed that is referred to, since the catalyst particle size has tolerance of variation.

### FEATURES OF THE INVENTION

1. A double tubes combined heat exchanger and steam reformer reactor for catalytic reforming of a hydrocarbon gas comprising
   - an outer casing having a longitudinal central axis,
   - at least one feed gas inlet,
   - at least one effluent gas inlet,
   - at least one product gas outlet,
   - a plurality of double tubes arranged longitudinally within the reactor, each double tube comprises an outer tube and an inner tube, the inner tube is arranged concentrically within the outer tube, the outer tube has an inner diameter which is larger than the outer diameter of an inner tube,
   - a first catalyst bed comprising a first type of catalyst particles arranged within the plurality of inner tubes,
   - a second catalyst bed comprising a second type of catalyst particles arranged within the reactor and outside the outer tubes,
   wherein the catalyst particle size of the first type of catalyst particles is larger than the catalyst particle size of the second type of catalyst particles.
2. Reactor according to feature 1, wherein the first type of catalyst particles has a particle volume which is 5% - 500%, preferably 10% - 200% larger than the particle volume of the second type of catalyst particles.
3. Reactor according to feature 1, wherein the first type of catalyst particles has a particle surface area which is 5% - 500%, preferably 10% - 200% larger than the particle surface area of the second type of catalyst particles.
4. Reactor according to feature 1, wherein the first type of catalyst particles has a particle length which is 5% - 500%, preferably 10% - 200% larger than the particle length of the second type of catalyst particles when measuring the largest outer particle dimension of the first and second type of catalyst particles respectively.

### BRIEF DESCRIPTION OF THE DRAWINGS

A more detailed description of the invention will be apparent from the following description of a specific embodiment with reference to the following principle drawings in which:
Fig. 1 shows a side partly cut view of a double tubes combined heat exchanger and steam reformer reactor according to a specific embodiment of the invention,
Fig. 2 shows a side partly cut view of a part of a double tube from a double tubes combined heat exchanger and steam reformer reactor according to a specific embodiment of the invention,
Fig. 3 shows an isometric top view of the upper tube sheet of a double tubes combined heat exchanger and steam reformer reactor according to a specific embodiment of the invention,
Fig. 4 shows a top view of a detail of the upper tube sheet of a double tubes combined heat exchanger and steam reformer reactor according to a specific embodiment of the invention,
Fig. 5 shows a principle side view of a detail of the two catalyst beds in the double tubes combined heat exchanger and steam reformer reactor according to a specific embodiment of the invention.

### POSITION NUMBERS

- 01.: Reactor.
- 02.: Outer casing.
- 03.: Feed gas inlet.
- 04.: Effluent gas inlet.
- 05.: Product gas outlet.
- 06.: Double tubes.
- 07.: Outer tube.
- 08.: Inner tube.
- 09.: First catalyst bed.
- 10.: First type of catalyst particles.
- 11.: Second catalyst bed.
- 12.: Second type of catalyst particles.
- 13.: Upper tube sheet.
- 14.: Lower tube sheet.

### DETAILED DESCRIPTION OF THE DRAWINGS

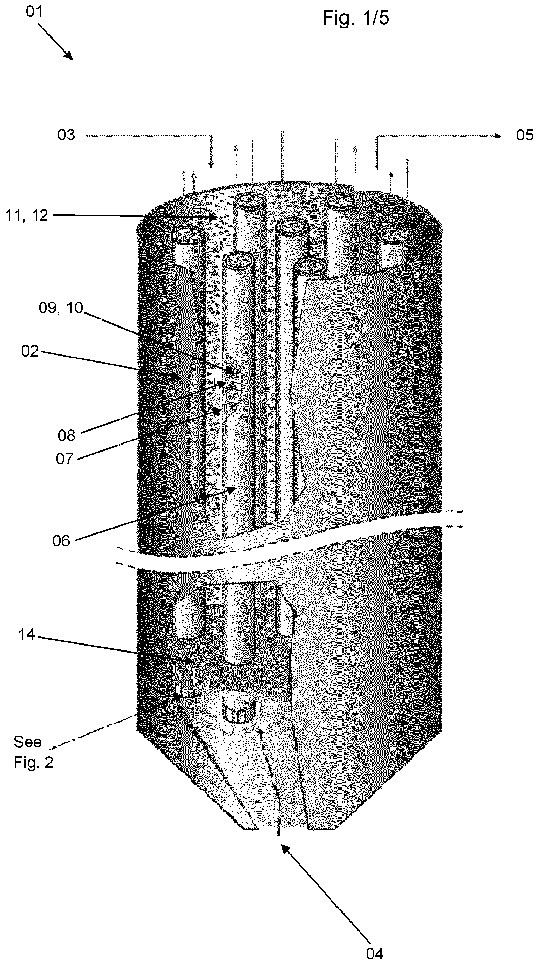

In Fig. 1 the double tubes combined heat exchanger and steam reformer reactor (in the following named reactor) 01 according to a specific embodiment of the invention is shown in a side and partly cut view. As can be seen, the reactor comprises an outer casing 02 which in this embodiment has a main cylindrical part and a lower conical part which encloses the internal parts of the reactor. The reactor comprises an upper tube sheet 13 (not shown in this Figure) and a lower tube sheet 14 which in cooperation supports the double tubes 06 in their desired locations in the reactor. The lower tube sheet also supports the second catalyst bed 11 comprising the second type of catalyst particles 12, which rest upon the lower tube sheet and surrounds the double tubes while filling the void within the reactor and around the double tubes 06.

The double tubes each comprises an outer tube 07 and an inner tube 08. The inner tube is located concentrically (as concentrically as practically possible as discussed earlier) within the outer tube and the inner tube is, as can be understood, so much smaller in diameter than the outer tube that it can easily be arranged within the outer tube and even leave an anulus between the inner tube and the outer tube, which anulus is large enough for a fluid stream to pass through. Each of the inner tubes is filled with first type of catalyst particles 10, which all together form the first catalyst bed 09. So, the first catalyst bed comprises all the first catalyst particles within all the inner tubes and the second catalyst bed comprises the catalyst particles within the reactor outer casing and around all the outer tubes between the upper tube sheet and the lower tube sheet. Both the upper tube sheet and the lower tube sheet have apertures (apart from the holes supporting the double tubes) which allows for a fluid flow to pass through the tube sheets, but which, especially for the lower tube sheet still allows for the tube sheet to support the second catalyst bed particles.

As only shown in principle, not in detail, the reactor further comprises a feed gas inlet 03 in the top which feeds gas both to the first and to the second catalyst bed, an effluent gas inlet 04 in the bottom of the reactor and a product gas outlet 05 in the top of the reactor. The gas flow is as follows: the feed gas enters in the top of the reactor from where it flows down through the (inner tubes) first catalyst bed and the (within reactor, around double tubes) second catalyst bed. In both catalyst beds the feed gas is being reformed by means of the catalyst. The two reformed gas streams meet and mixes in the lower part of the reactor, below the lower tube sheet, where the two streams also mix with the relatively hotter effluent gas, which is fed to the lower part of the reactor. The mix of reformed feed gas and relatively hot effluent gas then, as a consequence of balanced pressure of the two inlet streams and pressure-drops in the reactors two catalyst beds, flows up through the annulus between each of the inner tube and outer tube. Here the relatively hot mixed gas streams transfers heat to the two catalyst beds through the walls of the inner tubes and the outer tubes. Finally, the mixed gas streams forming a product gas flow out in the top of the reactor and exits the reactor via the product gas outlet.

As earlier discussed the catalyst particle size of the first type of catalyst particles, the ones arranged within the plurality of inner tubes, is larger than the catalyst particle size of the second type of catalyst particles, the ones arranged around the outer tubes and inside the outer casing. This means that the pressure drop in the first catalyst bed is balanced with the pressure drop in the second catalyst bed, whereas if the catalyst particle sizes were the same as in known reactors, the pressure drop in the first catalyst bed would be higher than the pressure drop in the second catalyst bed.

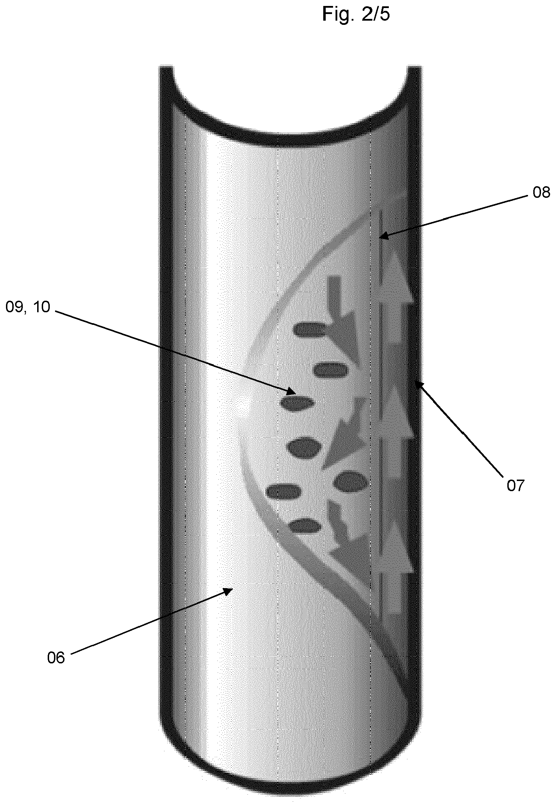

A detail view of a double tube is shown in Fig. 2. The inner tube supports the first type of catalyst particles and the outer tube is sufficiently larger than the inner tube to allow for an anulus between the two tubes where the mix of reformed gas and relative hot effluent gas, the product gas can flow.

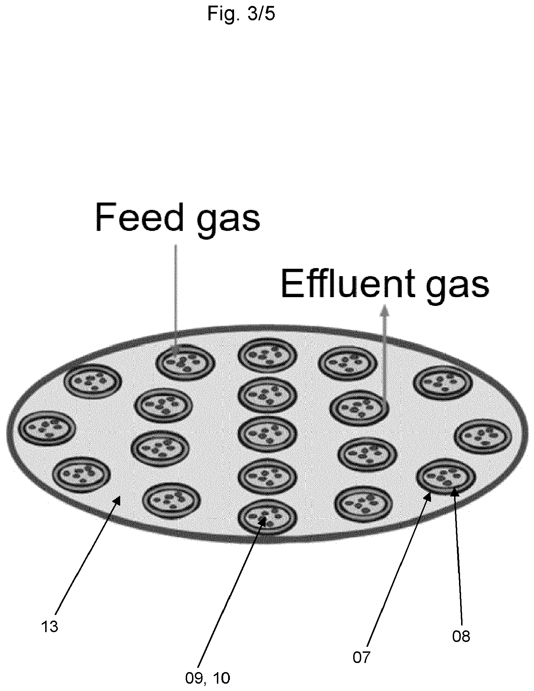

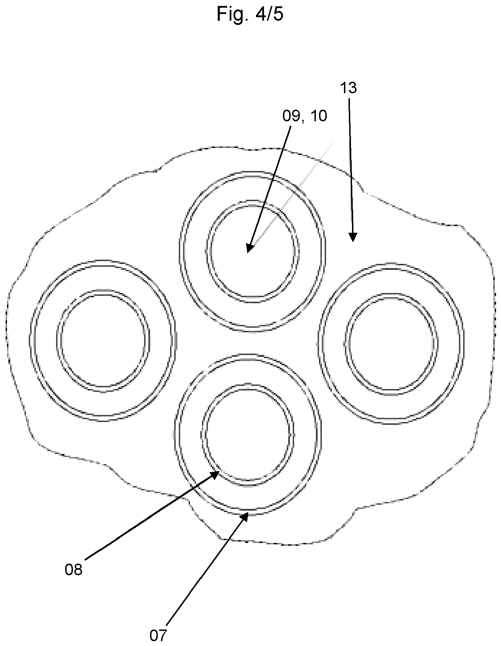

The upper tube sheet is shown in Fig. 3 supporting the double tubes. What is not visible are the apertures allowing the feed gas to pass through the upper tube sheet down to the second catalyst bed. Some of the catalyst particles of the first catalyst bed is shown within the inner tubes and as discussed, the effluent gas and reformed gas mix, the product gas can pass up through the anulus between the inner and the outer tubes to exit through the product gas outlet (not shown). A part of the upper tube sheet and some of the double tubes comprising inner and outer tubes is shown in greater detail in Fig. 4.

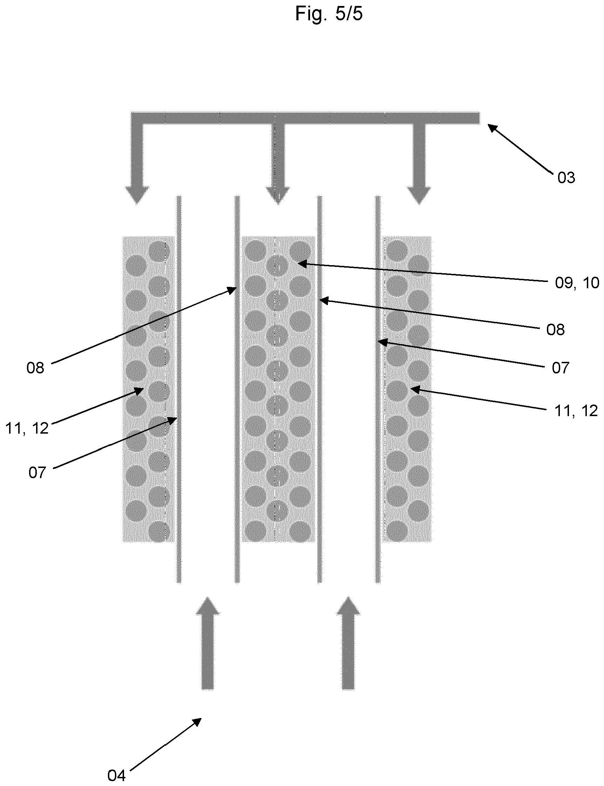

Also, in greater detail a part of the two catalyst beds and one double tube is shown in the principle, detail view in Fig. 5. The feed gas is supplied to both the first catalyst bed of first type of catalyst particles within the inner tube as well as to the second catalyst bed of second type of catalyst particles around the outer tube(s) and within the outer casing (not shown). It is to be understood that the shown views are principle views. The exact dimensions of tubes, catalyst sizes, reactor, voids, distances etc. varies from case to case depending on process parameters and pressure and pressure drop balances. The product gas flows up through the annulus formed between the inner tube and the outer tube.

## Claims

1. A double tubes combined heat exchanger and steam reformer reactor for catalytic reforming of a hydrocarbon gas comprising
• an outer casing having a longitudinal central axis,
• at least one feed gas inlet,
• at least one effluent gas inlet,
• at least one product gas outlet,
• a plurality of double tubes arranged longitudinally within the reactor, each double tube comprises an outer tube and an inner tube, the inner tube is arranged concentrically within the outer tube, the outer tube has an inner diameter which is larger than the outer diameter of an inner tube,
• a first catalyst bed comprising a first type of catalyst particles arranged within the plurality of inner tubes,
• a second catalyst bed comprising a second type catalyst particles arranged within the reactor and outside the outer tubes,
wherein the catalyst particle size of the first type of catalyst particles is larger than the catalyst particle size of the second type of catalyst particles.

2. Reactor according to claim 1, wherein the first type of catalyst particles has a particle volume which is 5% - 500%, preferably 10% - 200% larger than the particle volume of the second type of catalyst particles.

3. Reactor according to claim 1, wherein the first type of catalyst particles has a particle surface area which is 5% - 500%, preferably 10% - 200% larger than the particle surface area of the second type of catalyst particles.

4. Reactor according to claim 1, wherein the first type of catalyst particles has a particle length which is 5% - 500%, preferably 10% - 200% larger than the particle length of the second type of catalyst particles when measuring the largest outer particle dimension of the first and second type of catalyst particles respectively.
